# EUROPEAN PATENT SPECIFICATION

(11) **EP 2 347 931 B1**
(45) Date of publication and mention of the grant of the patent: **15.01.2020**
(21) Application number: 09823212.7
(22) Date of filing: 21.07.2009
(51) Int. Cl.: B60Q 1/08, G06K 9/00, G06T 7/269

(54) **HEADLAMP CONTROLLER**
SCHEINWERFERSTEUERUNG
DISPOSITIF DE COMMANDE DE PHARE

(30) Priority: 31.10.2008 JP 2008281973
(43) Date of publication of application: 27.07.2011
(73) Proprietor: Koito Manufacturing Co., Ltd., Tokyo 108-8711 (JP)
(72) Inventor: KOBAYASHI, Shoji, Shizuoka-shi Shizuoka 424-8764 (JP)
(74) Representative: Howson, Richard Giles Bentham
(86) International application number: PCT/JP2009/003409
(87) International publication number: WO 2010/050095

(56) References cited:
- DE-A1-102005 047 331
- JP-A- 2006 021 631
- JP-A- 2006 298 362
- JP-A- 2007 076 429
- JP-A- 2008 120 162
- JP-A- 2008 143 505
- US-A1- 2007 176 080

## Description

### Field of the Invention

The present invention relates to a headlamp controller that controls an automotive headlamp unit.

### Background Art

In recent years, various vehicle controls have been attempted in which vehicles are controlled in accordance with the environments and objects surrounding the vehicles that are discriminated based on the surrounding image information acquired by cameras mounted in the vehicles. For example, Patent Documents 1 to 4 disclose automotive back monitoring apparatuses each detecting a moving object traveling in back of a vehicle, such as another vehicle, by image-processing the image data of a rear image of the vehicle acquired by a camera installed in the vehicle . In such a monitoring apparatus, an optical flow is adopted as an image-processing method of detecting a moving object approaching from behind, such as another vehicle.

### Patent Documents

[Patent Document 1] Japanese Patent Application Publication No. 2000-11298
[Patent Document 2] Japanese Patent Application Publication No. 2000-251080
[Patent Document 3] Japanese Patent Application Publication No. 2001-21345
[Patent Document 4] Japanese Patent Application Publication No. 2002-104113

DE102005047331 describes a method which involves preventing dazzling by utilizing information of surroundings of vehicles.

US 2007176080 describes an image sensing system for a vehicle which includes an imaging sensor comprising a two-dimensional array of light sensing photosensor elements, preferably formed on a semiconductor substrate, and a logic and control circuit comprising an image processor for processing image data derived from the imaging sensor.

### DISCLOSURE OF THE INVENTION

### Problem to be Solved by the Invention

Conventionally, automotive headlamp apparatuses having various configurations have been devised in order to improve the visibility of the front of vehicles. For example, an apparatus has been devised in which low beam and high beam are switched from one to the other in accordance with presence/absence of a forerunning vehicle or the light axis of a headlamp is swiveled in accordance with a steering angle or vehicle speed.

On the other hand, in such an automotive headlamp apparatus, optimal light distribution control for improving the visibility and safety is changed every second in accordance with the situation in front of a vehicle. Accordingly, it is particularly needed to accurately discriminate what attribute an object present in front of a vehicle has.

The present invention has been made in view of these situations, and a purpose of the invention is to provide a technique in which proper light distribution control can be performed by accurately discriminating an object present in front of a driver's vehicle.

### Means for Solving the Problem

In order to solve the aforementioned challenge, the present invention is set out as in the appended claims.

According to the embodiment, an object can be discriminated based on an acquired taken-image, and hence proper light distribution control can be performed in accordance with the attribute of the object, without imposing a particular operational burden on a driver.

The headlamp control system may further comprise a road shape estimation means configured to estimate a road shape in front of a vehicle. The attribute discrimination means may discriminate the attribute of the object based on the optical flow of the object and the road shape. Thereby, the attribute of an object can be discriminated accurately even if the road shape is a curve road or bend road.

The attribute discrimination means discriminate the attribute of the object by comparing the relative speed between the driver's vehicle and the object to the driver's vehicle speed, the relative speed being estimated from the optical flow of the object. Thereby, the attribute of an object can be discriminated in further detail, and hence more proper light distribution control can be performed.

The attribute discrimination means may discriminate that the attribute of the object is either a fixed object or a moving object with respect to a road, by comparing the relative speed to the driver's vehicle speed. Thereby, for example, when the relative speed with on object is almost equal to the driver's vehicle speed, the attribute discrimination means can discriminate that the object is a fixed object, such as a road lighting or a delineator; and when the relative speed with an object is different from the driver's vehicle speed, the attribute discrimination means can discriminate that the object is a moving object, such as an oncoming vehicle or leading vehicle.

The attribute discrimination means discriminate that the attribute of the object is either a road lighting or a delineator, depending on where the optical flow of the object is present in the vertical direction of a taken-image. The installation position of a road lighting or a delineator is usually stipulated to some extent. For example, there are many cases where a road lighting is located above the horizon and a delineator is below the horizon. Accordingly, these items can be discriminated from each other depending on where the optical flow of an object is present in the vertical direction of a taken-image.

The road shape estimation means may estimate the road shoulder position of a road by a texture analysis in which a fast Fourier transform is performed on a taken-image of the front of a vehicle. Thereby, a road shoulder region can be discriminated from a road surface even if, for example, a lane mark is not present on the road surface. Accordingly, for example, the position of the optical flow of an object can be calculated accurately with respect to a road surface, and hence the attribute of the object can be discriminated accurately.

### Advantage of the Invention

According to the present invention, proper light distribution control can be performed in accordance with the attribute of an object present in front of a vehicle.

### BRIEF DESCRIPTION OF THE DRAWINGS

Fig. 1 is a view schematically illustrating the relationship between a vanishing point on a straight road of an express way and an optical flow;
Fig. 2 is a schematic view illustrating the external appearance of a vehicle to which an automotive headlamp apparatus according to the present embodiment is applied;
Fig. 3 is a block diagram illustrating the outline configuration of the automotive headlamp apparatus according to the present embodiment;
Fig. 4 is a flowchart illustrating a light distribution control method including processing of discriminating the attribute of an object according to the present embodiment;
Fig. 5 is a graph illustrating an example of graphs showing the relationship between a luminance and an image concentration D;
Fig. 6 is a view schematically illustrating the patterns of a road shoulder and road surface, as well as the results after both the images have been subjected to a texture analysis;
Fig. 7 (a) is a view illustrating curve roads (dashed lines) that are curved left and right with respect to a straight road (solid lines);
Fig. 7 (b) is a view illustrating a curve road (dashed lines) that rises and falls with respect to a straight road (solid lines) ;
Fig. 7(c) is a schematic view illustrating the appearance of a vehicle traveling on the curve road of Fig. 7(b), when viewed from the side;
Fig. 8 is a view schematically illustrating the positional relationship between objects in a taken-image of the front of a vehicle, the objects being subjected to processing of discriminating the attribute of an object; and
Fig. 9 is a flowchart illustrating a method of discriminating an object according to the present embodiment.

### Reference Numerals

- 10: VEHICLE
- 12: HEADLAMP APPARATUS
- 14: CONTROL SYSTEM
- 16: FORWARD MONITORING CAMERA
- 18: ANTENNA
- 22: STEERING SENSOR
- 24: VEHICLE SPEED SENSOR
- 26: ILLUMINANCE SENSOR
- 32: IMAGE PROCESSING ECU
- 34: LIGHT DISTRIBUTION CONTROL ECU
- 36: GPS NAVIGATION ECU
- 38: IN-VEHICLE LAN CONTROL ECU
- 40: IN-VEHICLE LAN BUS
- 42: HIGH-SPEED BUS
- 44: EXTERNAL DATA INPUT MEANS
- 46: IMAGE DATA ACQUISITION MEANS
- 48: IMAGE DATA ACCUMULATING MEANS
- 50: IMAGE ANALYSIS MEANS
- 52: CONCENTRATION-LUMINANCE CONVERSION MEANS
- 54: SHINING OBJECT DETECTION MEANS
- 56: INTERNAL MEMORY
- 58: OF CALCULATION MEANS
- 60: OBJECT ATTRIBUTE DISCRIMINATION MEANS
- 62: INTERNAL DATA OUTPUT MEANS
- 110: AUTOMOTIVE HEADLAMP APPARATUS

### BEST MODE FOR CARRYING OUT THE INVENTION

Various methods of controlling a light distribution of a headlamp unit (headlight) of a vehicle, etc., have been devised in which the light distribution is controlled in accordance with the environments and road situations where the vehicle is traveling and with other vehicles around the vehicle. However, there are various types of objects present in front of a vehicle. Of them, there are objects for which light distribution control in which glare is taken into consideration is needed, such as an oncoming vehicle and a leading vehicle; on the other hand, there are other objects for which light distribution control optimal for a driver's vehicle, in which glare is not taken into consideration, only has to be performed, such as a road lighting and delineator (visual guidance) . Then, intending to achieve proper light distribution control expected in accordance with the attribute of an object present in front of a vehicle, the present inventor has conceived of the invention disclosed in the present application.

In order to achieve such light distribution control of a headlamp unit, it is preferable to use a sensor that detects a light emitter, such as a forerunning vehicle (an oncoming vehicle or leading vehicle) traveling in front of a driver's vehicle, and a light reflector, such as a road lighting or delineator. In addition to that, it is more preferable that the function of specifying the attribute of a light emitter or light reflector that has been detected as an object is provided. Herein, the "attribute" means the information by which, for example, it can be discriminated that a forward light emitter or light reflector is either a forerunning vehicle or a piece of facilities attached to road, etc. In more detail, the "attribute" means the information by which: when a light emitter, or the like, is a vehicle, it can be discriminated that the light emitter is either a leading vehicle or an oncoming vehicle; and when a light emitter or the like is a piece of facilities attached to road, etc., it can be discriminated that the light emitter is a road lighting, a delineator, a piece of other light emitting facilities (for example, a store lighting and advertisement, etc.), or a traffic light.

In the embodiment described below, the aforementioned discrimination of the attribute of an object is achieved by an apparatus having a simpler configuration, and specifically by the image sensor of a monocular camera. The accuracy in discriminating the attribute of an object is improved by adopting the following method (which will be described in detail later) in addition to the above simple apparatus configuration. Specifically, (a) the accuracy in discriminating the attribute of a moving object is improved by utilizing an optical flow; (b) the accuracy in discriminating the attribute of an object on a road (a fixed object) is improved by setting a road zone and by utilizing a row of light spots in addition to (a); and (c) the accuracy in discriminating the attribute of an object on a road is improved by utilizing a vanishing point of the road.

The accuracy in discriminating the attribute of an object can be further improved by calculating and utilizing the approximate distance between a driver's vehicle and a light emitter or light reflector (hereinafter, appropriately referred to as a "light emitter, etc.") and the information on the luminance (brightness) of the light emitter, etc., in addition to the attribute of the light emitter, etc. In this case, a laser radar or millimeter-wave radar may be used for measuring the distance between a driver's vehicle and a light emitter, etc. In addition, an illuminance meter may be used for measuring the luminance.

### (Utilization of Optical Flow)

When the relative positional relationship between an image sensor (camera) and an object on a road is changed, the image of the object flows in continuous taken-images. Such a phenomenon is referred to as an optical flow (hereinafter, appropriately referred to as an "OF"). An OF becomes larger as the relative distance between a driver's vehicle and an object is smaller and as the relative speed difference between the two is larger. For example, while a driver's vehicle is being stopped, an OF corresponding to a moving object is generated. On the other hand, while a driver's vehicle is traveling, an OF corresponding to a fixed object on a road, such as a road lighting, a delineator, or the like, is generated and an OF corresponding to a forerunning vehicle traveling at a speed different from that of the driver's vehicle. Accordingly, it can be discriminated that the attribute of an object present in front of a driver's vehicle is either a moving object or a fixed object with respect to a road, based on how large the OF of the object is.

### (Utilization of Vanishing Point of Road)

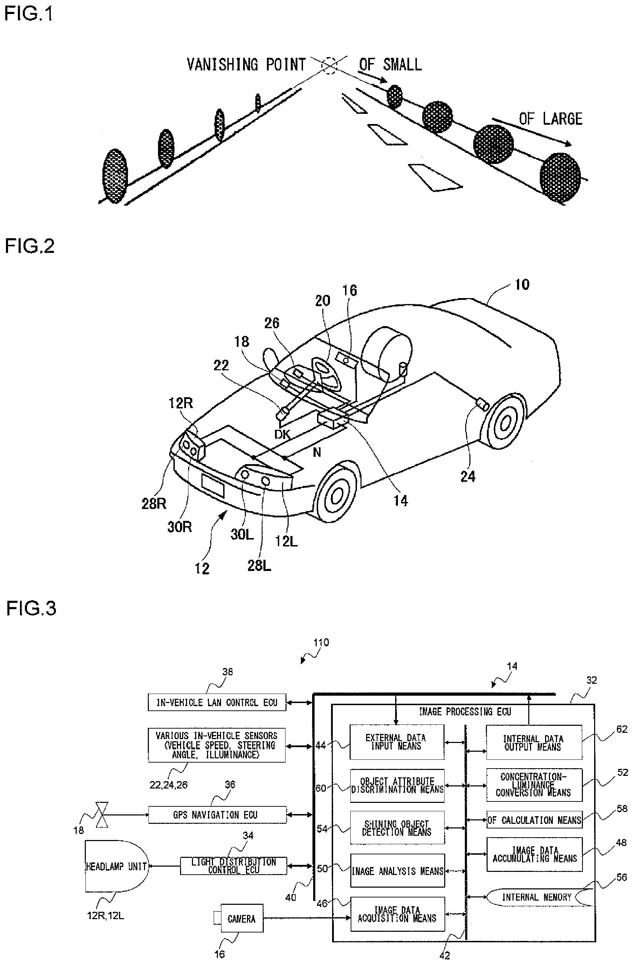

Fig. 1 is a view schematically illustrating the relationship between a vanishing point on a straight road of an express way and an optical flow. As illustrated in Fig. 1, a vanishing point exists on a straight road. Herein, the vanishing point can be defined as a convergence point in the perspective of pictures. A vanishing point becomes a point at infinity of a lane mark, roadside strip, center divider, facilities attached to a road (a road lighting or delineator) that are installed in regular arrangement, or the like. When a point at infinity cannot be determined due to a road shape (for example, a curve) or presence of a forerunning vehicle, etc., it is also possible that a temporary vanishing point is created by extending the arrangement of these objects in a near view to infinity and then by estimating an intersection point of these extended lines on a screen. Although it is difficult to calculate a vanishing point on a curve road (a right-left curve and up-down of a road), it is possible to calculate it on a left-right turning road. Also, when a driver's vehicle is moved in the width direction of a road because of a traffic lane change, etc., a vanishing point is moved with the movement of the driver's vehicle.

### (Setting of Road Zone and Utilization of Row of Light Spots)

A road zone of a driver' vehicle lane or an oncoming vehicle lane can be determined by analyzing the image data of a lane mark, roadside strip, center divider, or the like in front of a vehicle. Because facilities attached to a road, such as a road lighting and a delineator, etc., are regularly arranged on a road, it can be discriminated more accurately, at night, what type of an object a light emitter, etc., is, by determining a road zone. Specifically, by taking into consideration, at night, which position a shining point or a row of light spots of a light emitter, etc., are present at with respect to a road zone (for example, in a driver's vehicle lane, an oncoming vehicle lane, or a road shoulder), and taking into consideration the state of the aforementioned OF, it becomes possible to discriminate that the attribute of a light emitter, etc., is a road lighting, a delineator, a leading vehicle, or an oncoming vehicle.

Hereinafter, the best modes for carrying out the present invention will be described in detail with reference to the accompanying drawings. In the description of the drawings, the same elements are denoted with the same reference numerals and duplicative description will be appropriately omitted.

Fig. 2 is a schematic view illustrating the external appearance of a vehicle to which an automotive headlamp apparatus according to the present embodiment is applied. As illustrated in Fig. 1, a vehicle 10 according to the embodiment comprises: a headlamp apparatus 12; a control system 14 as a headlamp control apparatus configured to control the emission of light by the headlamp apparatus 12; various sensors configured to detect information indicating a traveling situation of the vehicle 10 to output the detected signals to the control system 14; a forward monitoring camera 16 configured to monitor the front of the vehicle; and an antenna 18 configured to receive an orbital signal from a GPS satellite and to output the signal to the control system 14.

For example, a steering sensor 22 for detecting a steering angle of a steering wheel 20, a vehicle speed sensor 24 for detecting the vehicle speed of the vehicle 10, and an illuminance sensor 26 for detecting the illuminance around a driver's vehicle are provided as the various sensors, these sensors 22, 24, and 26 being connected with the aforementioned control system 14.

A headlamp apparatus applicable to the present invention is not particularly limited, as far as the apparatus has a configuration in which a light distribution of light to be emitted can be changed in accordance with the attribute of an object present in front of a vehicle. For example, a headlamp using a halogen lamp, a gas discharge headlamp, or an LED can be adopted. A method in which a lamp can be swiveled will be described as an example of the present embodiment.

The headlamp apparatus 12 has a left and right pair of headlamp units 12R and 12L. The headlamp units 12R and 12L have the same configurations as each other except that the internal structures thereof are symmetrical each other. A lamp unit 28R for low beam and a lamp unit 30R for high beam are arranged in the right lamp housing and a lamp unit 28L for low beam and a lamp unit 30L for high beam are arranged in the left lamp housing, respectively.

The control system 14 controls, based on each output of the various sensors that has been inputted in the control system 14, the headlamp units 12R and 12L that are respectively provided on both sides of the forward portion of a vehicle and can be swiveled, that is, controls the headlamp apparatus 12 in which a light distribution property thereof can be changed by deflection-controlling the light emission direction in the horizontal or vertical direction. As such the headlamp units 12R and 12L that can be swiveled, a headlamp unit provided with a rotationally driving means can be cited in which, for example, a reflector or a projector lamp, which is provided in the headlamp unit as a configuration rotatable in the horizontal direction, is rotationally driven by a driving force source, such as a drive motor, etc. According to an AFS (Adaptive Front-Lighting System) of this type, it becomes possible to light a road ahead of a curve in accordance with the traveling speed of a vehicle while the vehicle is traveling on the curve road, which is effective for improving driving safety.

### (Automotive Headlamp Apparatus)

Subsequently, an automotive headlamp apparatus according to the present embodiment will be described. Fig. 3 is a block diagram illustrating the outline configuration of an automotive headlamp apparatus 110 according to the embodiment. The automotive headlamp apparatus 110 comprises: the headlamp units 12R and 12L; and the control system 14 configured to control the emission of light by each of the headlamp units 12R and 12L. In the automotive headlamp apparatus 110, the control system 14 discriminates the attribute of an object present in front of a vehicle to determine a condition of the light distribution control based on the attribute of the object, so that the emission of light by the headlamp units 12R and 12L is controlled based on the determined condition of the light distribution control.

Accordingly, a forward monitoring camera 16 for acquiring a taken-image of the front of a vehicle including a visual target of a driver is connected with the control system 14 according to the present embodiment. Also, the steering sensor 22 and the vehicle speed sensor 24 for respectively detecting steering information and vehicle speed that are referred to when a driving state of a vehicle is determined, and the illuminance sensor 26 are connected with the control system 14. As the illuminance sensor 26, for example, a sensor in which a light-receiving surface is vertically installed such that the illuminance of the light received from an oncoming vehicle or an artificial light source (a road lighting or store lighting) can be measured on a vertical surface (a glare amount by an artificial light source), or a sensor in which a light receiving surface is horizontally installed such that the luminance of the light received from a driving environment or above a vehicle can be measured on a horizontal surface, are adopted.

### (Control System)

The control system 14 comprises: an image processing ECU 32; a light distribution control ECU 34; a GPS navigation ECU 36; and an in-vehicle LAN control ECU 38. The various ECUs and various in-vehicle sensors are connected through an in-vehicle LAN bus 40 such that data can be transmitted and received. The image processing ECU 32 discriminates the attribute of an object present in front of a vehicle based on the data of a taken-image acquired by the forward monitoring camera 16 and the various in-vehicle sensors. Each unit within the image processing ECU 32 is connected through a high-speed bus 42. The light distribution control ECU 34 determines a condition of the light distribution control suitable for a driving environment in which a vehicle is placed, based on the information from the image processing ECU 32 and the various in-vehicle sensors, and outputs the control signals to the headlamp units 12R and 12L.

The light distribution of each of the headlamp units 12R and 12L is controlled by inputting the control signal outputted from the light distribution control ECU 34 into the driving device of an optical component or the lighting control circuit of a light source. The forward monitoring camera 16 is a monocular camera provided with an image sensor, such as a CCD or CMOS, and acquires, from the image data thereof, the information on road line shapes and the information on existence states or positions of facilities attached to roads, oncoming vehicles, and leading vehicles, in cooperation with another radar sensor if necessary.

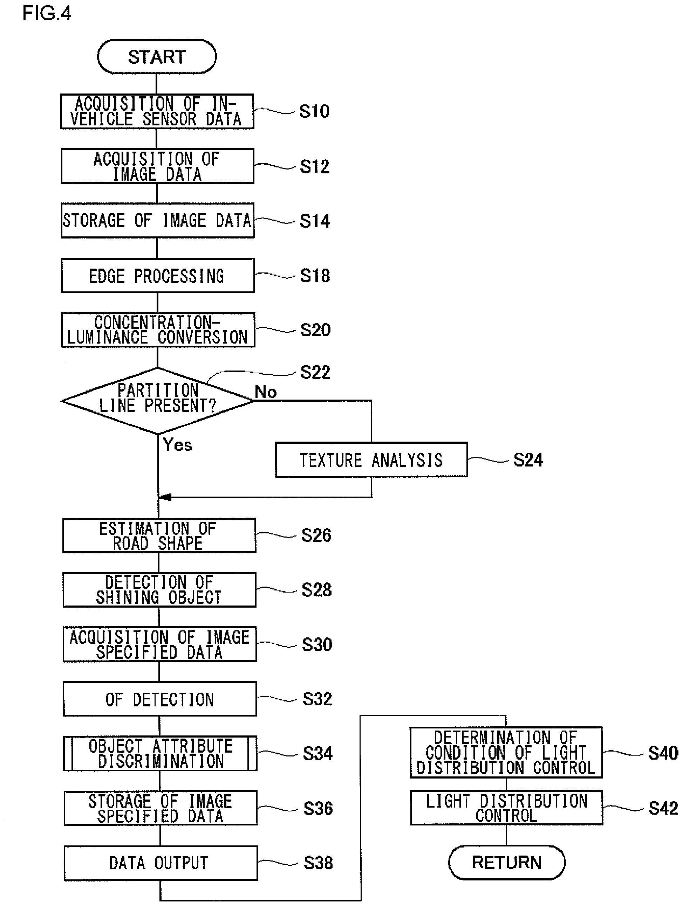

Fig. 4 is a flowchart illustrating a light distribution control method including the processing of discriminating the attribute of an object according to the present embodiment. The discrimination of the attribute of an object is mainly executed in the image processing ECU 32 illustrated in Fig. 3, and the light distribution control is mainly executed in the light distribution control ECU 34.

When the processing is initiated at a predetermined timing, the data outputted from the various in-vehicle sensors (the steering sensor 22, vehicle speed sensor 24, illuminance sensor 26) are acquired by an external data input means 44 through the in-vehicle LAN bus 40 (S10) . In addition, the image data of a taken-image taken by the forward monitoring camera 16 is acquired by an image data acquisition means 46 (S12) . The image data outputted from the forward monitoring camera 16 may support a monochrome image or a color image.

The acquired image data is temporarily stored in a storage means, such as a RAM, in an image data accumulating means 48 (S14). An image analysis means 50 performs edge processing in which the outline of an object whose concentration is different from that of the surroundings of the object (e.g., a light emitter, such as a headlight or road lighting, and a light reflector, such as a lane mark or delineator) is extracted by performing a difference operation, differential operation, and further a SOBEL operation on the concentration data included in the image data (S18). A method of edge processing is not limited thereto and a publicly-known method may be used after being modified appropriately.

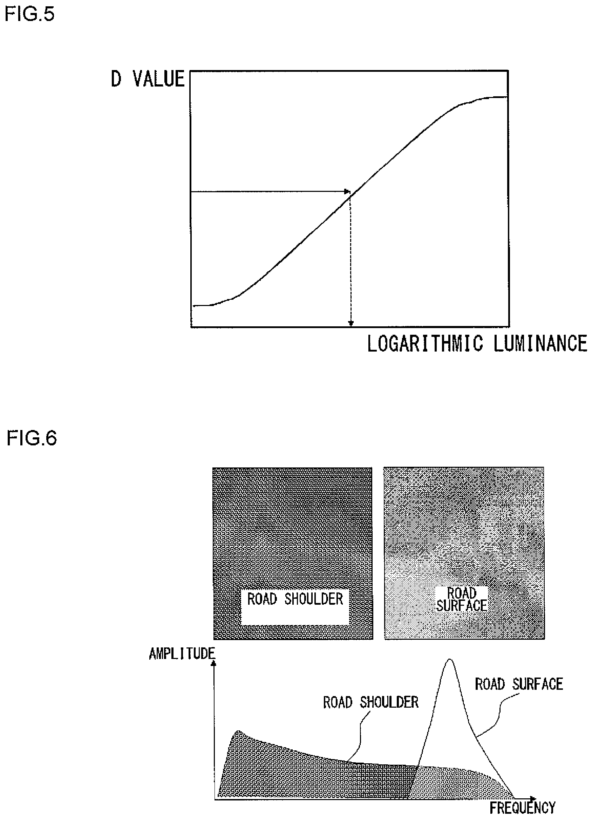

The concentration data of an image is then converted into luminance (brightness) data in a concentration-luminance conversion means 52 (S20). The conversion of image data into luminance can be performed by taking into consideration an exposure condition, when the relationship between an image concentration and a luminance in the forward range of a vehicle has been determined under an exposure condition (image taking condition). Fig. 5 is a graph illustrating an example of graphs showing the relationship between a luminance and an image concentration D.

The image analysis means 50 determines whether a lane mark (partition line) is present in the object whose outline has been extracted by the edge processing (S22). When there is no partition line, the position of a road shoulder cannot be determined as it is. Accordingly, when it has been determined that there is no partition line (S22/No), a texture analysis is performed based on the image data (S24). The texture analysis means that a pattern showing, for example, a regular change in shading is digitized, and when the image data of each of a road surface and a road shoulder is subjected to a frequency analysis (FFT), frequency characteristics different from each other are usually acquired.

Fig. 6 is a view schematically illustrating the patterns of a road shoulder and a road surface, as well as the results after both images have been subjected to a texture analysis. As illustrated in the view, the image of a road surface includes many high-frequency components because the texture of the road surface is fine; on the other hand, the image of a road shoulder where vegetation and road structures are present includes broad-frequency components. Therefore, by comparing an analysis result of a predetermined area of the image data with, for example, the frequency component distribution of an image of a road surface that has been stored beforehand, the position of a road shoulder can be detected even if no partition line is present. That is, the position where the frequency characteristic corresponding to a road surface is changed to a different frequency characteristic can be estimated as the position of a road shoulder.

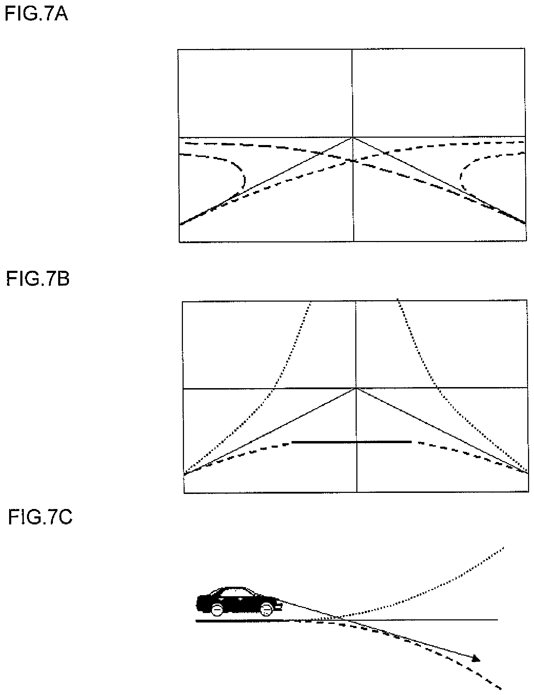

The image analysis means 50 calculates the information correlated with a road shape, such as a traffic lane width of a road, road shoulder position, road shape, and position of a vanishing point, etc., so that a road shape is estimated, based on the image analysis result including the aforementioned detection of the partition line and the texture analysis (S26). Fig. 7(a) is a view illustrating curve roads (dashed lines) that are curved left and right with respect to a straight road (solid lines); Fig. 7(b) is a view illustrating a curve road (dashed lines) that rises and falls with respect to a straight road (solid lines); and Fig. 7(c) is a schematic view illustrating the appearance of a vehicle traveling on the curve road of Fig. 7(b), when viewed from the side. When a partition line cannot be detected, for example, in rainy weather, or when a road shape is a curve road (a right-left curve or up-down), a vanishing point cannot be calculated as illustrated in Figs. 7(a) to 7(c). Accordingly, in such a case, a virtual vanishing point may be calculated based on the steering angel data and the data from a GPS. In the present embodiment, the image analysis means 50 functions as a road shape estimation means.

After a road shape has been estimated, the position of a shining object, such as, for example, a light emitter or light reflector, is detected. Specifically, a shining object detection means 54 extracts, as a shining object, an object having a predetermined or more luminance (for example, the luminance corresponding to a lane mark) in the concentration-luminance conversion performed in the processing of S20, so that the position of the shining object is detected (S28).

Subsequently, the attribute of the shining object is determined by an analysis of image data continuously acquired in a time-series manner as moving images. In the first step, the data on the image characteristics of the position and candidates of the shining object stored in an internal memory 56 in the previous image analysis processing, and the data on the current image characteristic are acquired by an OF calculation means 58 (S30) .

The OF calculation means 58 detects whether an OF is generated in each shining object based on the data on the image characteristics of multiple taken-images that have been acquired at different time (S32) . Specifically, the OF calculation means 58 calculates the OF of a shining object present in front of a vehicle as a light emitter or light reflector, based on the luminance data of the acquired taken-image of the front of the vehicle. Subsequently, an object attribute discrimination means 60 discriminates the attribute of the object based on the OF calculated by the OF calculation means 58 (S34). The method of discriminating the attribute of an object in S34 will be described later.

When the attribute of an object is discriminated, the data on the current image characteristic is stored in the internal memory 56 (S36). Specifically, the position and attribute of a shining object that are necessary for detecting an OF, and the vector of an OF, etc., are stored therein. These data will be used for detecting an OF in the next image processing.

The attribute data of each object discriminated by the object attribute discrimination means 60 and the data on a road shape, etc., are outputted from an internal data output means 62 (S38). The outputted data are inputted into the light distribution control ECU 34 through the in-vehicle LAN bus 40, so that a condition of light distribution control is determined based on the attribute of an object, a driving state of a driver's vehicle, and a weather condition, all of which are included in the data (S40). The light distribution control ECU 34 outputs control signals to the light sources and driving sources provided in the headlamp units 12R and 12L based on the determined condition of light distribution control, so that a light distribution is controlled (S42).

### (Method of Discriminating Attribute of Object)

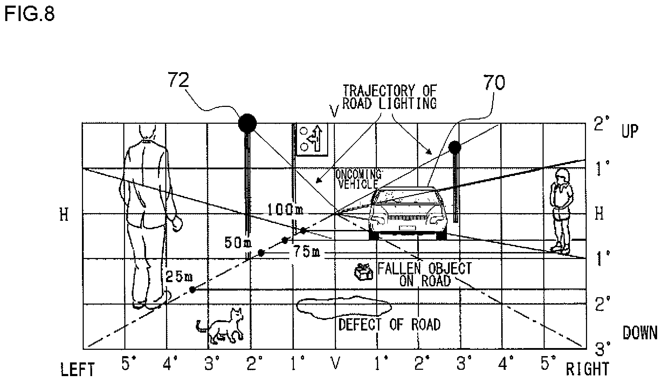

Subsequently, the step S34 in which the processing of discriminating the attribute of an object is performed will be described in detail. Fig. 8 is a view schematically illustrating the positional relationship between objects in a taken-image of the front of a vehicle, the objects being subjected to processing of discriminating the attribute of an object. As illustrated in Fig. 8, various objects are present in front of a vehicle travelling on a road. Under such a situation, examples of an object discriminated, as a shining object, by the forward monitoring camera 16 installed in a vehicle traveling at night include the following objects:

The HLs (headlights) of an oncoming vehicle 70 traveling at night and the TLs (taillight) of a leading vehicle are first cited. These lights are usually present as a left and right pair of lights and located below the horizon H illustrated in Fig. 8. In addition, an OF becomes small when an object is a leading vehicle, and becomes large when an object is an oncoming vehicle.

Subsequently, a road lighting 72 and a delineator are cited. The standards for installing these fixed objects are usually specified, and therefore a road lighting is located, for example, at five meters or higher than the road surface, that is, located above the horizon H (see Fig. 8) . On the other hand, a delineator (not illustrated in Fig. 8) is installed on the top portion of a guardrail, and therefore is located below the horizon H. In addition, when an object is a fixed one, the OF thereof takes a value corresponding to the driver's vehicle speed and the distance between the object and the driver's vehicle.

Other than the aforementioned objects, a store lighting, advertising neon sign, curve sign, etc., can be detected as shining objects. A store lighting and advertising neon sign are fixed objects randomly located and there is no regularity in the positions where they are arranged, different from the cases of a road lighting and delineator. And therefore, by performing an image analysis taking into consideration this point, a fixed object, such as a road lighting, etc., can be discriminated. In addition, because a curve sign is installed at approximately the same height as a delineator, the discrimination thereof from a delineator is difficult. However, there is no influence on light distribution control if a curve sign is erroneously recognized as a delineator, and hence particular consideration is not needed in the image analysis.

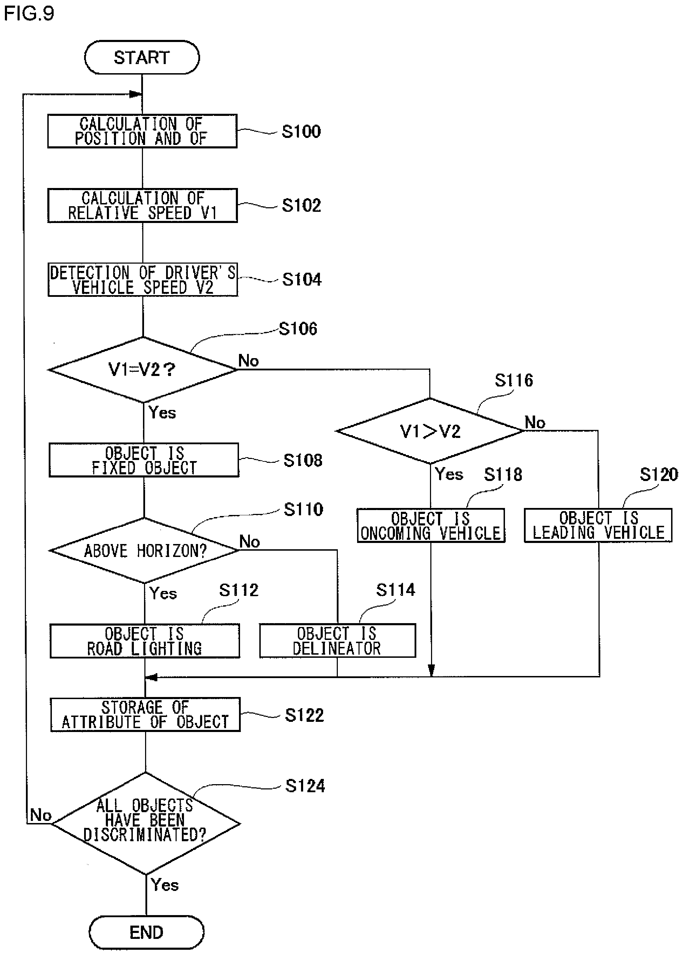

A method of discriminating an object according to the present embodiment is performed on the assumption of the presence of the aforementioned objects. Fig. 9 is a flowchart illustrating a method of discriminating an object according to the present embodiment. In the first step, the object attribute discrimination means 60 calculates the position of a shining object and the vector of an OF based on the detected OF (S100). Subsequently, the object attribute discrimination means 60 calculates the relative speed V1 of the object based on the OF vector and the information on the aforementioned vanishing point (S102), and simultaneously calculates the driver's vehicle speed V2 from the vehicle speed sensor (S104).

When the relative speed V1 and the driver's vehicle speed V2 are substantially equal to each other, despite the consideration of a calculation error occurring in the image analysis and a detection error of the sensors (S106/Yes), the object is discriminated to be a fixed one (S108). The object attribute discrimination means 60 further determines whether the position where the object is present is above the horizon (S110) . When the position of the object is above the horizon (S110/Yes), the object is discriminated to be a road lighting (S112) ; and when the position thereof is below the horizon (S110/No), the object is discriminated to be a delineator (S114).

When the relative speed V1 with the object and the driver's vehicle speed V2 are different from each other (S106/No), the object is estimated to be a moving one, not a fixed one. Accordingly, assuming that the relative speed V1 occurring when an object is approaching a driver's vehicle is positive, it is determined whether the relative speed V1 is larger than the driver's vehicle speed V2 (S116). When the relative speed V1 is larger than the driver's vehicle speed V2 (S116/Yes), the object attribute discrimination means 60 discriminates that the object is an oncoming vehicle (S118) ; and when the relative speed V1 is smaller than the driver's vehicle speed V2 (S118/No), the object attribute discrimination means 60 discriminates that the object is a leading vehicle (S120).

Subsequently, the discriminated attribute of an object is stored for every object (S122), and it is determined whether all objects in the image data have been discriminated (S124). When one or more of all the objects have not been discriminated (S124/No), the processing returns to S100. When all the objects have been discriminated (S124/Yes), a series of the processing are once terminated.

In the aforementioned object discrimination processing based on the information on an OF vector and the position of an object, the accuracy in discriminating a store lighting, advertisement neon sign, curve sign, or the like, can be improved by taking into account the information on a road shape that has been calculated in the step S26 and the information on the characteristics of a road on which a vehicle is currently traveling (such as, the road type such as an express way, number of traffic lanes, and an urban area or suburb, etc.), the information on the characteristics of a road being acquired from the GPS navigation ECU 36.

In addition, a camera capable of discriminating the color of a shining object is preferred as the forward monitoring camera 16. With such a camera, it becomes easy to discriminate a leading vehicle, oncoming vehicle, traffic light, road lighting, store lighting, or the like, in an urban area where much noise light are present, by calculating the ratio of the R (Red) -element output to the B (Blue) -element output of the sensor with respect to the position of a shining object.

Of the image data, when the ratio R/B (TL) of the R-element output to the B-element output of the sensor with respect to the position of a tail light TL (leading vehicle, red) is compared to the ratio R/B (HL) of the R-element output to the B-element output of the sensor with respect to the position of a headlight HL (oncoming vehicle, white), the relationship: R/B(TL) >> R/B (HL) holds. Accordingly, by acquiring R/B with respect to the light of each color by experiments and simulations beforehand, the accuracy of the discrimination between a leading vehicle and an oncoming vehicle can be improved. The accuracy of the discrimination between a leading vehicle and an oncoming vehicle can be particularly improved in a curve road where the two vehicles are likely to cross each other.

As described above, because the control system 14 according to the present embodiment can discriminate an object based on the acquired taken-image, proper light distribution control can be performed in accordance with the attribute of an object, without imposing a particular operational burden on a driver. Accordingly, the light distribution control ECU 34 can perform the light distribution control based on the data acquired from the image processing ECU 32, in which: for example, when determining that a shining object is not present in front of a vehicle, the light distribution control ECU 34 automatically makes the light distribution of a headlamp unit to be high beam; and when determining that an oncoming vehicle or a leading vehicle is present as a shining object, the light distribution control ECU 34 automatically makes the light distribution of the headlamp unit to be low beam.

In addition, when determining that a road lighting or a delineator, which cannot be discriminated from an oncoming vehicle or leading vehicle before, is only present, the light distribution control ECU 34 maintains the light distribution of the headlamp unit at a high beam state, and thereby the lighting capability of the headlamp unit can be utilized more effectively.

Further, because the image processing ECU 32 comprises the image analysis means 50 by which the road shape in front of a vehicle is estimated, the attribute of an object can be discriminated based on the OF of an object and the road shape. Thereby, the attribute of an object can be discriminated accurately even if a road shape is a curve road or a bend road.

Furthermore, because the object attribute discrimination means 60 can discriminate the attribute of an object by comparing the relative speed V1 between a driver's vehicle and an object that can be estimated from the OF of the object to the driver's vehicle speed V2, the attribute of the object can be discriminated further in detail. Thereby, more proper light distribution control can be performed.

Specifically, it can be discriminated that the attribute of an object is either a fixed object or a moving object with respect to a road by comparing the relative speed V1 to the driver's vehicle speed V2. Thereby, for example, when the relative speed V1 with an object is almost equal to the driver's vehicle speed V2, the object attribute discrimination means 60 can discriminate that the object is a fixed object, such as a road lighting, delineator, or the like; and when the relative speed V1 with an object is different from the driver's vehicle speed V2, the object attribute discrimination means 60 can determine that the object is a moving object, such as an oncoming vehicle, leading vehicle, or the like.

Further, depending on where the position of an object or the OF thereof is present in the vertical direction of a taken-image, the object attribute discrimination means 60 can discriminate that the attribute of the object is either a road lighting or a delineator.

Furthermore, because the image analysis means 50 can estimate the road shoulder position of a road by a texture analysis in which a fast Fourier transform is performed on a taken-image of the front of a vehicle, a road shoulder region can be discriminated from a road surface even if, for example, a lane mark is not present on the road surface. Thereby, the attribute of an object can be discriminated accurately even with the control system 14 installed in a vehicle traveling on such a road surface.

According to the control system 14 as a headlamp control system according to the present embodiment and to the automotive headlamp apparatus 110 provided with the control system 14, detailed light distribution control can be performed in accordance with, in particular, the traffic visual environments (lighting situation, oncoming vehicle situation) at night, thereby contributing to the prevention of traffic accidents. Further, in the control system 14 according to the present embodiment, the attribute of a shining object can be discriminated by using a monocular camera, not using multiple cameras or a camera having a complicated mechanism, and hence the cost of the whole system can be reduced.

## Claims

1. A headlamp control system (14) comprising:
a shining object detection means (54) configured to extract an object having a predetermined luminance based on luminance information, produced by a concentration-luminance conversion means (52), of an image taken by a forward monitoring camera (16) ;
an optical flow calculation means (58) configured to calculate an optical flow of the object present in front of the vehicle based on data on image characteristics of multiple images that have been acquired at different times, wherein the object comprises a light emitter or light reflector;
an attribute discrimination means (60) configured to discriminate an attribute of the object based on the optical flow; and
a light distribution control means (34) configured to control a light distribution of a headlamp unit (12R, 12L) provided in the vehicle, based on the attribute of the object,
wherein the attribute discrimination means discriminates the attribute of the object by comparing the relative speed between the driver's vehicle and the object to the driver's vehicle speed, the relative speed being estimated from the optical flow of the object,
wherein the attribute discrimination means discriminates that the object is a fixed object and that the attribute of the object is either a road lighting, when a position of the object is determined to be above the horizon, or a delineator, when a position of the object is determined to be below the horizon, depending on where the optical flow of the object is present in the vertical direction of the image.

2. The headlamp controller according to claim 1 further comprising
a road shape estimation means configured to estimate a road shape in front of a vehicle, wherein
the attribute discrimination means discriminates the attribute of the object based on the optical flow of the object and the road shape.

3. The headlamp controller according to claim 1, wherein
the attribute discrimination means discriminates that the attribute of the object is either a fixed object or a moving object with respect to a road, by comparing the relative speed to the driver's vehicle speed.

4. The headlamp controller according to claim 2, wherein
the road shape estimation means estimates the road shoulder position of a road by a texture analysis in which a fast Fourier transform is performed on the image.

## Patentansprüche

1. Frontscheinwerfer-Steuersystem (14), das Folgendes umfasst:
Mittel (54) zum Detektieren eines leuchtenden Objekts, die konfiguriert sind, ein Objekt, das eine festgelegte Leuchtkraft aufweist, auf der Basis von Luminanzinformationen, die durch Konzentrations/Luminanz-Umsetzungsmittel (52) erzeugt werden, eines Bildes, das durch eine nach vorn blickende Überwachungskamera (16) aufgenommen wurde, zu extrahieren;
Mittel (58) zum Berechnen eines optischen Flusses, die konfiguriert sind, einen optischen Fluss des Objekts, das sich vor dem Fahrzeug befindet, auf der Basis von Daten von Bildeigenschaften von mehreren Bildern, die zu verschiedenen Zeitpunkten aufgenommen wurden, zu berechnen, wobei das Objekt ein Leuchtelement oder einen Lichtreflektor umfasst;
Mittel (60) zum Unterscheiden von Merkmalen, die konfiguriert sind, ein Merkmal des Objekts auf der Basis des optischen Flusses zu unterscheiden; und
Mittel (34) zum Steuern der Lichtverteilung, die konfiguriert sind, eine Lichtverteilung einer Frontscheinwerfereinheit (12R, 12L), die in dem Fahrzeug vorgesehen ist, auf der Basis des Merkmals des Objekts zu steuern;
wobei die Mittel zum Unterscheiden von Merkmalen das Merkmal des Objekts durch Vergleichen der Relativgeschwindigkeit zwischen dem Fahrzeug des Fahrers und dem Objekt mit der Geschwindigkeit des Fahrzeugs des Fahrers unterscheiden, wobei die Relativgeschwindigkeit aus dem optischen Fluss des Objekts abgeschätzt wird,
wobei die Mittel zum Unterscheiden von Merkmalen abhängig davon, ob der optische Fluss des Objekts in der vertikalen Richtung des Bilds vorliegt, unterscheiden, dass das Objekt ein feststehendes Objekt ist und dass das Merkmal des Objekts eine Straßenbeleuchtung ist, wenn festgestellt wird, dass eine Position des Objekts über dem Horizont liegt, oder dass es ein Leitpfosten ist, wenn festgestellt wird, dass eine Position des Objekts unter dem Horizont liegt.

2. Frontscheinwerfersteuerung nach Anspruch 1, die ferner Folgendes umfasst:
Mittel zum Abschätzen eines Straßenverlaufs, die konfiguriert sind, einen Straßenverlauf vor einem Fahrzeug abzuschätzen, wobei
die Mittel zum Unterscheiden von Merkmalen das Merkmal des Objekts auf der Basis des optischen Flusses des Objekts und des Straßenverlaufs unterscheiden.

3. Frontscheinwerfersteuerung nach Anspruch 1, wobei
die Mittel zum Unterscheiden von Merkmalen durch Vergleichen der Relativgeschwindigkeit mit der Geschwindigkeit des Fahrzeugs des Fahrers unterscheiden, ob das Merkmal des Objekts in Bezug auf eine Straße ein feststehendes Objekt oder ein sich bewegendes Objekt ist.

4. Frontscheinwerfersteuerung nach Anspruch 2, wobei
die Mittel zum Abschätzen des Straßenverlaufs die Straßenbankettposition einer Straße durch eine Texturanalyse abschätzen, wobei eine schnelle FourierTransformation an dem Bild durchgeführt wird.

## Revendications

1. Système de commande de phare (14) comprenant :
un moyen de détection d'objet brillant (54) configuré pour extraire un objet ayant une luminance prédéterminée sur la base d'informations de luminance, produites par un moyen de conversion concentration-luminance (52), d'une image prise par une caméra de surveillance avant (16) ;
un moyen de calcul de flux optique (58) configuré pour calculer un flux optique de l'objet présent devant le véhicule sur la base de données sur les caractéristiques d'image de plusieurs images qui ont été acquises à différents moments, l'objet comprenant un émetteur de lumière ou réflecteur de lumière ;
un moyen de discrimination d'attribut (60) configuré pour discriminer un attribut de l'objet sur la base du flux optique ; et
un moyen de commande de répartition de la lumière (34) configuré pour commander une répartition de la lumière d'une unité de phare (12R, 12L) prévue dans le véhicule, sur la base de l'attribut de l'objet,
le moyen de discrimination d'attribut discriminant l'attribut de l'objet en comparant la vitesse relative entre le véhicule du conducteur et l'objet à la vitesse du véhicule du conducteur, la vitesse relative étant estimée à partir du flux optique de l'objet,
le moyen de discrimination d'attribut discriminant que l'objet est un objet fixe et que l'attribut de l'objet est soit un éclairage routier, lorsqu'une position de l'objet est déterminée comme étant au-dessus de l'horizon, soit un délinéateur, lorsqu'une position de l'objet est déterminée comme étant au-dessous de l'horizon, selon l'endroit où le flux optique de l'objet est présent dans la direction verticale de l'image.

2. Commande de phare selon la revendication 1, comprenant en outre
un moyen d'estimation de forme de route configuré pour estimer une forme de route devant un véhicule,
le moyen de discrimination d'attribut discriminant l'attribut de l'objet sur la base du flux optique de l'objet et de la forme de route.

3. Commande de phare selon la revendication 1,
le moyen de discrimination d'attribut discriminant que l'attribut de l'objet est soit un objet fixe, soit un objet mobile par rapport à une route, en comparant la vitesse relative à la vitesse du véhicule du conducteur.

4. Commande de phare selon la revendication 2, le moyen d'estimation de la forme de la route estimant la position de l'accotement de route d'une route par une analyse de texture dans laquelle une transformation de Fourier rapide est réalisée sur l'image.
